# EUROPÄISCHE PATENTANMELDUNG

(11) **EP 3 798 482 A1**
(43) Veröffentlichungstag der Anmeldung: **31.03.2021**
(21) Anmeldenummer: 20173803.6
(22) Anmeldetag: 11.05.2020
(51) Int. Cl.: F16J 15/06, F16K 1/44, F16K 1/46

(54) **DICHTUNGSEINSTICH FÜR EINE RADIALE DICHTUNG**

(30) Priorität: 25.09.2019 DE 102019214641
(71) Anmelder: Evoguard GmbH, 93149 Nittenau (DE)
(72) Erfinder: SAUER, Martin, 93073 Neutraubling (DE)
(74) Vertreter: Grünecker Patent- und Rechtsanwälte PartG mbB

(57) **Zusammenfassung**

Ventilteil für eine radiale Dichtung (101) im Hygienebereich, mit einem Dichtungseinstich zur Aufnahme von O-Ringen oder Formdichtungen, umfassend eine Nut, die einen wellenförmigen Nutgrund aufweist.

## Beschreibung

### Gebiet der Erfindung

Die Erfindung betrifft einen Ventilteil für eine radiale Dichtung im Hygienebereich, mit einem Dichtungseinstich, sowie eine radiale Dichtung mit einem derartigen Ventilteil und einem entsprechenden Ventil mit einer derartigen radialen Dichtung.

### Hintergrund der Erfindung

Für dynamische radiale Dichtungen im Hygienebereich, insbesondere an radial gedichteten Sitz- und Doppelsitzventilen, werden verschiedene Dichtsysteme eingesetzt. Die einfachste Variante stellen häufig trapezförmige Einstiche mit eingepresstem O-Ring dar, wobei sich der Einstich meistens an den Vorgaben des O-Ring-Herstellers orientiert. Des Weiteren finden meist trapezförmige Einstiche in Verbindung mit einer im Querschnitt ebenfalls annähernd trapezförmigen Dichtung Verwendung, vgl. DE102007027464. Diese Art der Einstiche benutzt die Ecken der Trapeznut zum Ausgleich der unterschiedlichen Dichtungsvolumina auf Grund von Toleranzschwankungen von Nut und Dichtung oder durch die Temperaturänderungen des Dichtungssystems. Des Weiteren finden sich Dichtungssysteme bestehend aus einer Formdichtung und der entsprechend gestalteten Nut, vgl. DE102009042142. Eine weitere Ausführungsform sind Radialdichtungen, die aus einer Formdichtung und einem Stützring bestehen, welcher die Dichtung in der Nut unterstützt und bevorzugt die Wärmedehnung der Dichtung minimiert und die dynamischen und statischen Abdichtbereiche trennt, vgl. DE102014114977.

### Nachteile Stand der Technik

Bei Trapezeinstichen für O-Ringe oder Formdichtungen ist es in der herkömmlichen Form nahezu unmöglich die Anforderungen an genügend Freiraum für die Ausdehnung der Dichtung zu schaffen und gleichzeitig die sogenannte Hinterwanderungssicherheit sicherzustellen, d.h. sicherzustellen, dass das Produkt die Dichtung nicht hinterwandert. In der Regel wird eine hinterwanderungssichere Dichtung bei Temperatur, insbesondere bei Sterilisationstemperaturen von 130°C, überlastet, was von einem Setzen der Dichtung, d.h. Elastizitätsverlust, bis zum vorzeitigen Verschleiß oder der Zerstörung der Dichtung durch Spaltextrusion führt. Auch kann der Abrieb der Dichtung deutlich erhöht werden, so dass der Weichkörper der Dichtung rasch ersetzt werden muss. Spezielle Nuten mit entsprechenden Formdichtungen können diese Nachteile kompensieren, sind aber auf Grund der komplizierten Nut- und Dichtungsgeometrien meist aufwändig, generieren hohe Werkzeugkosten für die Dichtung und sind oft bei sehr kleinen Sitzdurchmessern schlecht zu realisieren. Dies gilt auch für Systeme mit Stützringen, hier ist insbesondere noch anzumerken, dass eine zweiteilige Ausführung der Ventilteller zwingend erforderlich ist.

Angesichts der Probleme im Stand der Technik ist es Aufgabe der vorliegenden Erfindung, insbesondere für Ventile kleiner Nennweiten mit radialen Dichtungen die oben genannten Probleme zu minimieren und die Druckfestigkeit der Dichtungen im Ventilsitz zu erhöhen.

Der Einsatz ist insbesondere für Dichtungsaufgaben für Ventile kleiner Nennweiten. Da hier die zu erwarteten Stückzahlen klein sind und die zu erzielenden Verkaufspreise niedrig sind, ist der Einsatz einer Formdichtung häufig nicht zielführend. Stattdessen werden O-Ringe eingesetzt, wobei es sich um handelsübliche O-Ringe handelt.

### Beschreibung der Erfindung

Diese Aufgaben werden mit einem Ventilteil für eine radiale Dichtung, einer entsprechenden radialen Dichtung mit einem derartigen Ventilteil, sowie mit einem entsprechenden Ventil gemäß der vorliegenden Erfindung gelöst.

Die Erfindung stellt bereit: Ein Ventilteil für eine radiale Dichtung im Hygienebereich, mit einem Dichtungseinstich zur Aufnahme von O-Ringen oder Formdichtungen, umfassend eine Nut, die einen wellenförmigen Nutgrund aufweist.

Insbesondere bei Auswahl eines O-Rings für die Realisierung der Abdichtung ist zu bedenken, dass Toleranzschwankungen und Wärmedehnung den O-Ring beim Abdichten stark beanspruchen. Ein wellenförmiger Nutgrund schafft hier nötige Ausgleichsräume, in die sich die der O-Ring bei entsprechender Beanspruchung und bei Wärmedehnung zurückziehen kann.

In dem Ventilteil kann die Nut trapezförmig sein.

Die Trapezform ist die typische Form für radiale Dichtungen in der vorliegenden Anwendung und hat dort Vorteile gegenüber etwa einiger rechteckigen Form. In der Mehrzahl der Anwendungen handelt es sich typischerweise um gleichschenklige Trapezformen, d.h. die beiden Schenkel des Trapezes sind gleich lang und es gibt eine zu einer Seite senkrechte Symmetrieachse. Gleichwohl ist es denkbar, dass auch allgemeinere Trapezformen Anwendung finden können. Im Folgenden soll unter einer trapezförmigen Nut eine Nut mit einer gleichschenkligen Trapezform verstanden werden, sofern es nicht ausdrücklich anders gesagt wird.

In dem Ventilteil kann der wellenförmige Nutgrund in den Ecken der Nut jeweils ein Minimum aufweisen, wobei insbesondere die Minima gleichförmig ausgebildet sein können.

Als Minimum soll hier ein Freiraum verstanden werden. Das bedeutet, dass gegenüber einem herkömmlichen, ebenen Nutgrund ohne Wellenprofil zusätzliche Freiräume geschaffen werden, die - bei trapezförmiger Form der Nut - größer sind als die Ecken des Trapezes, also der Nut bei einem ebenen, flachem Nutgrund.

Diese Minima liegen gegenüber dem herkömmlichen, ebenen Nutgrund tiefer. Hierhin kann sich also der O-Ring bei Belastung zurückziehen.

In dem Ventilteil kann der wellenförmige Nutgrund zwischen den Ecken der Nut mindestens zwei Maxima aufweisen, wobei insbesondere die Maxima gleichförmig ausgebildet sein können.

Um ein vorzeitiges Abgleiten der Dichtung, insbesondere des O-Ringes, in die Freiräume der Minima unter Druckbelastung zu vermeiden, werden am Nutgrund Maxima vorgesehen. Diese dienen als Stütze für die Dichtung, also für den O-Ring. An diesen Maxima kann sich der O-Ring abstützen.

In dem Ventilteil können jeweils zwei Maxima der mindestens zwei Maxima durch jeweils ein weiteres Minimum getrennt sein.

Im einfachsten Fall entsteht somit ein weiteres Minimum, dass direkt am Mittelpunkt des Nutgrunds liegt. Dieses weitere Minimum kann zu einer zusätzlichen Aufnahme des O-Rings bei Ausdehnung des O-Rings dienen. Im einfachsten Fall liegen somit zwei Minima, also Freiräume, in den jeweiligen Ecken der Nut vor, während es direkt in der Mitte des Nutgrundes ein weiteres Minimum gibt.

In dem Ventilteil können die Maxima symmetrisch um den Mittelpunkt des Nutgrunds angeordnet sein.

In dem Ventilteil können für Dichtungen oder O-Ringe, die sich in einem Querschnittsbereich von 3 mm bis 4mm bewegen, die Höhenunterschiede zwischen den Minima und den Maxima zwischen 0,4mm und 1mm betragen, wobei die Höhenunterschiede bei Nuten für größere Dichtungen diesen Bereich auch nach oben überschreiten können.

In dem Ventilteil kann im Nutgrund die Anzahl der Maxima um eins geringer ist als die Anzahl der Minima sein.

In dem Ventilteil kann die Nut zweiteilig ausgebildet sein.

Bei kleinen Durchmessern des Sitzes der Dichtung und bei Schnurstärken des O-Rings von weniger als 4 mm kann die Nut zweiteilig ausgestaltet sein.

In dem Ventilteil kann die Nut einteilig ausgebildet sein.

Die Nut kann für dickere O-Ringe mit Schnurstärken von größer als 4 mm auch einteilig ausgeführt werden.

Es wird ferner bereitgestellt: Eine Radiale Dichtung für den Einsatz im Hygienebereich, umfassend einen Sitz, einen Schließkörper, der Schließkörper mit einem Ventilteil gemäß obiger Beschreibung.

Für die radiale Dichtung wie oben beschrieben, kann der Durchmesser des Sitzes kleiner als 25 mm sein.

Es wird ebenso bereitgestellt: Ein Ventil für den Einsatz im Hygienebereich, umfassend eine oder mehrere radiale Dichtungen wie oben beschrieben.

Das Ventil kann ein Wechselventil sein.

Das Ventil kann ein radial dichtendes Doppelsitzventil ist.

Das Ventil kann auch ein beliebiges Ventil einer anderen Bauart sein, welches für seine Funktion eine radiale Abdichtung benötigt.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

### Kurzbeschreibung der Figuren

Es zeigen:
Figur 1: Schematische Skizze eines Wechselventils mit einer radialen Dichtung gemäß der vorliegenden Erfindung.
Figur 2: Einen vergrößerten Ausschnitt aus der Skizze der Figur 1, wobei der stark vergrößerte Ausschnitt die radiale Dichtung mit einem Ventilteil gemäß der vorliegenden Erfindung zeigt.

### Detaillierte Beschreibung

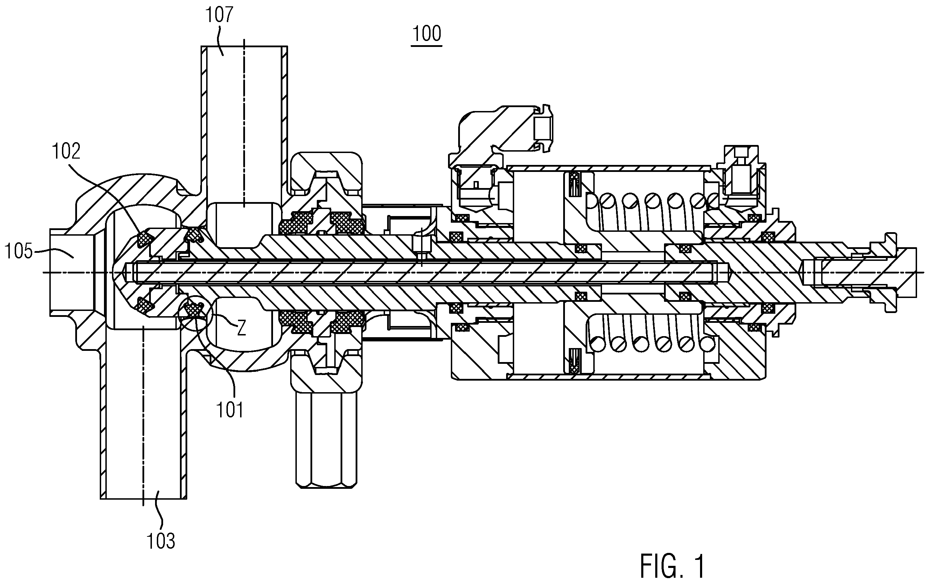

Die Figur 1 zeigt als Beispiel eines möglichen Einsatzes der erfindungsgemäßen radialen Dichtung ein Wechselventil 100. Das Wechselventil 100 kann wechselweise einen Durchgang zwischen den Ein- / Ausgängen 103 und 105 bzw. 103 und 107 schalten. Es ist hier aber ein Wechselventil nur beispielhaft gewählt. Eine weitere Möglichkeit ist der Einsatz der radialen Dichtungen für ein radial dichtendes Doppelsitzventil, d.h. ein praktisch leckagefrei schaltendes Doppelsitzventil. Das Wechselventil 100 der Figur 1 kann beispielsweise in Anlagen und Systemen zur Herstellung von Lebensmitteln, Kosmetika und Pharmaprodukten eingesetzt werden.

Der Einsatz einer radialen Dichtung ermöglicht das leckagefreie Schalten bei Doppelsitzventilen oder, wie beim dargestellten Wechselventil 100, bietet er die Möglichkeit, den Ventileinsatz nach oben aus dem Gehäuse des Ventils ausbauen zu können, ohne den Ventilsatz selbst zerlegen zu müssen.

Die Figur 1 zeigt rein beispielhaft eine radiale Dichtung 101 und eine axiale Dichtung 102. Es versteht sich, dass die Zahl der verwendeten Dichtungen für verschiedene Ventil oder Ventiltypen unterschiedlich sein kann.

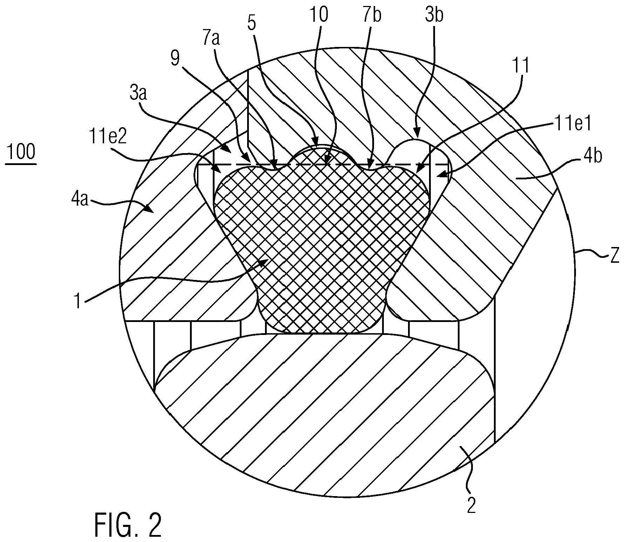

Die radiale Dichtung 101 ist in der nachfolgenden Figur 2 näher dargestellt, indem ein Bereich Z aus der Figur 1 vergrößert dargestellt wird.

Die Figur 2 zeigt einen vergrößerten Ausschnitt aus der Skizze der Figur 1, wobei der stark vergrößerte Ausschnitt eine radiale Dichtung 101 mit einem Ventilteil mit einem Dichtungseinstich gemäß der vorliegenden Erfindung zeigt. Dabei beträgt die Vergrößerung etwa 8:1.

In der Fig. 2 ist dargestellt, dass die radiale Dichtung 101 einen Sitz 2 und einen Schließkörper 4a, 4b, zeigt. Der Schließkörper kann dabei zweiteilig ausgebildet sein. Ferner zeigt die Figur 2 eine Nut 11 sowie eine Dichtung, d.h. Weichkörper, hier einen O-Ring 1. Dabei kann es sich um einen handelsüblichen O-Ring handeln. Alternativ kann auch eine Formdichtung verwendet werden. Wenn der Sitz 2 gegen den O-Ring 1 drückt, wird dieser zusammengequetscht, d.h. elastisch verformt. In der Figur 2 ist die Nut 11 als eine trapezförmige Nut, wobei die Trapezform bzw. Schwalbenschwanzform häufig die Form der Wahl ist bei den vorliegenden Anwendungen.

In der Fig. 2 ist ein hypothetischer, flacher, d.h. ebener Nutgrund der Nut 11 mit einer gestrichelten Linie 9 angedeutet. Ebenso sind Ecken 11e1 und 11e2 der Nut 11 bezeichnet, die bei einer gewählten eckigen Form, insbesondere bei einer Trapezform, eindeutig sind. Die Figur 2 zeigt weiter, dass der Nutgrund der Nut 11 gegenüber dem flachen, herkömmlichen Nutgrund, der mit der gestrichelten Linie 9 angedeutet ist, wellenförmig ausgebildet ist. Der Nutgrund der Nut 11 ist also gewellt gegenüber einem flachen Nutgrund. Dabei werden zunächst keine Anforderungen an eine Regelmäßigkeit der Wellenform gestellt. Gleichwohl kann der Nutgrund ein regelmäßiges Wellenprofil aufweisen (in Fig. 2 nicht gezeichnet).

In Fig. 2 sind insbesondere in den Ecken des Nutgrundes der Nut 11 Minima 3a, 3b des Wellenprofils des Nutgrundes gezeigt. Diese Minima sollen als zusätzliche Freiräume verstanden werden, die einen deutlich größeren Freiraum in der jeweiligen Ecke der Nut bereitstellen, als dies vorher bei einem flachen, ebenen Nutgrund möglich gewesen ist. In diese Freiräume 3a und 3b kann sich nun bei thermischer Belastung und/oder Druckbelastung die Dichtung, also die Formdichtung oder insbesondere der O-Ring 1 hinein ausdehnen. Somit kann ein möglicher Verschleiß und Abrieb des O-Rings 1 reduziert oder gar vermieden werden. Somit wird der Dichtung, also dem O-Ring 1 eine Ausweichmöglichkeit bereitgestellt, in die er sich bei Belastung zurückziehen kann, so dass das Risiko einer Beschädigung des O-Ringes deutlich gemindert wird.

Ferner zeigt Fig. 2 Maxima 7a und 7b an, die gegenüber dem herkömmlichen, flachen, ebenen Nutgrund sich erheben. Die Maxima 7a und 7b sollen in Bezug auf das Wellenprofil des Nutgrundes als Erhebungen über dem herkömmlichen, flachen, ebenen Nutgrund verstanden werden. Die Maxima 7a und 7b können in Bezug auf den Mittelpunkt des Nutgrundes der Nut 11 symmetrisch angeordnet sein. Diese Maxima 7a und 7b können die Dichtung, also den O-Ring 1, stützen, um ein vorzeitiges Abgleiten des O-Ringes in die Freiräume 3a, 3b zu verhindern. Zwischen den Maxima 7a und 7b ist ein weiteres Minimum 5 in Bezug auf den herkömmlichen, flachen, ebenen Nutgrund angedeutet. Dieses Minimum 5 kann eine andere Tiefe als die Minima 7a und 7b in Bezug auf den Nutgrund haben. Das Minimum 5 kann eine zusätzliche Rückzugsmöglichkeit für den O-Ring 1 bei Belastung bereitstellen.

In einer Verallgemeinerung (hier nicht gezeigt) können auch mehr als zwei Maxima und mehr als drei Minima im Wellenprofil des Nutgrunds vorgesehen sein. Dabei wäre beispielsweise die Anzahl der Maxima stets um eins kleiner als die Anzahl der Minima.

Es gilt also: die Gestaltung der Nut ermöglicht den Einsatz eines O-Rings als Abdichtung, ohne die dabei sonst auftretenden Nachteile. Durch den wellenförmigen Nutgrund ist es möglich, die Grundverpressung zu erhöhen ohne dabei die Dichtung zu überlasten. Die Wellenform erhöht gegenüber einem flachen Nutgrund mit Ausgleichsräumen in den Ecken die Druckfestigkeit der Abdichtung um ca. 30%. Ebenfalls erhöht sich dadurch die Hinterwanderungssicherheit. Durch die erhöhte Druckfestigkeit ist ein höheres Toleranzspiel der Dichtung möglich und die Dichtung ist bei Verschleiß länger dicht.

Die Nut ist bei kleinen Durchmessern des Sitzes und bei Schnurstärken des O-Rings < 4mm vorteilhaft zweiteilig gestaltet, bei größeren Durchmessern und Schnurstärken ist auch eine einteilige Ausführung denkbar. Der Einsatz eines O-Rings ermöglicht eine kostengünstige Alternative, da dabei ein reduzierter Aufwand an Werkzeugen besteht.

## Patentansprüche

1. Ventilteil für eine radiale Dichtung (101) im Hygienebereich, mit einem Dichtungseinstich zur Aufnahme von O-Ringen (1) oder Formdichtungen, umfassend eine Nut (11), die einen wellenförmigen Nutgrund aufweist.

2. Ventilteil gemäß Anspruch 1, wobei die Nut (11) trapezförmig ist.

3. Ventilteil gemäß Anspruch 1 oder 2, wobei der wellenförmige Nutgrund in den Ecken (11e1, 11e2) der Nut (11) jeweils ein Minimum (3a, 3b) aufweist, wobei insbesondere die Minima (3a, 3b) gleichförmig ausgebildet sind.

4. Ventilteil gemäß Anspruch 3, wobei der wellenförmige Nutgrund zwischen den Ecken (11e1, 11e2) der Nut (11) mindestens zwei Maxima (7a, 7b) aufweist, wobei insbesondere die Maxima (7a, 7b) gleichförmig ausgebildet sind.

5. Ventilteil gemäß Anspruch 4, wobei jeweils zwei Maxima der mindestens zwei Maxima (7a, 7b) durch jeweils ein weiteres Minimum (5) getrennt sind.

6. Ventilteil gemäß Anspruch 4 oder 5, wobei die Maxima (7a, 7b) symmetrisch um den Mittelpunkt (10) des Nutgrunds angeordnet sind.

7. Ventilteil gemäß einem der Ansprüche 3-6, wobei im Nutgrund die Anzahl der Maxima (7a, 7b) um eins geringer ist als die Anzahl der Minima (3a, 3b, 5).

8. Ventilteil gemäß einem der Ansprüche 1 - 7, wobei die Nut (11) zweiteilig ausgebildet ist.

9. Ventilteil gemäß einem der Ansprüche 1 - 7, wobei die Nut (11) einteilig ausgebildet ist.

10. Radiale Dichtung (101) im Hygienebereich, umfassend einen Sitz (2), einen Schließkörper (4a, 4b), der Schließkörper (4a, 4b) mit einem Ventilteil gemäß einem der Ansprüche 1 - 9.

11. Radiale Dichtung gemäß Anspruch 10, wobei der Durchmesser des Sitzes (2) kleiner als 25 mm ist.

12. Ventil (100) für den Einsatz im Hygienebereich, umfassend eine oder mehrere radiale Dichtungen (101) gemäß Anspruch 10.

13. Ventil (100) gemäß Anspruch 12, wobei das Ventil ein Wechselventil ist.

14. Ventil (100) gemäß Anspruch 12, wobei das Ventil ein radial dichtendes Doppelsitzventil ist.

15. Vorrichtung im Bereich der Lebensmittel- und Genussmittelhandhabung, wie beispielsweise eine Abfüllanlage oder ein Tanklager, **gekennzeichnet dadurch, dass** sie eine oder mehrere Ventile nach einem der Ansprüche 12 bis 14 umfasst.
